# EUROPÄISCHE PATENTSCHRIFT

(11) **EP 1 321 175 B1**
(45) Veröffentlichungstag und Bekanntmachung des Hinweises auf die Patenterteilung: **09.12.2009**
(21) Anmeldenummer: 02028720.7
(22) Anmeldetag: 20.12.2002
(51) Int. Cl.: B01D 3/14

(54) **Verfahren zur destillativen Auftrennung von Stoffgemischen in einer Trennwandkolonne mit ganz oder teilweise dampfförmigen Zulauf und/oder ganz oder teilweise dampfförmiger Seitenentnahme**
Process for separating substance mixtures by distillation in a dividing wall column with a total or partial gaseous feed and/or a total or partial gaseous side-stream
Procédé pour la séparation par distillation de mélanges de substances dans une colonne de distillation à paroi de séparation avec une admission gazeuse totale ou partielle et/ou une soutirage latérale totale ou partielle

(30) Priorität: 21.12.2001 DE 10163335
(43) Veröffentlichungstag der Anmeldung: 25.06.2003
(73) Patentinhaber: BASF SE, 67056 Ludwigshafen (DE)
(72) Erfinder: Kaibel, Gerd, Dr., 68623 Lampertheim (DE); Miller, Christian, Dr., 67152 Ruppertsberg (DE); Klass, Katrin, Dr., 68159 Mannheim (DE); Kindler, Alois, Dr., 67269 Grünstadt (DE); Aquila, Werner, Dr., 68309 Mannheim (DE); Dobler, Walter, Dr., 68723 Schwetzingen (DE); Breuer, Klaus, Dr., 67122 Altrip (DE); Pommer, Achim, 67273 Weisenheim (DE); Dirnsteiner, Thomas, 55116 Mainz (DE)
(74) Vertreter: Isenbruck, Günter

(56) Entgegenhaltungen:
- EP-A- 1 127 601

## Beschreibung

Die Erfindung betrifft ein Verfahren zur destillativen Aufarbeitung eines Stoffgemisches in einer Trennwandkolonne mit ganz oder teilweise dampfförmigem Zulauf und/oder ganz oder teilweise dampfförmiger Seitenentnahme.

Für die kontinuierliche destillative Zerlegung von Mehrstoffgemischen sind verschiedene Verfahrensvarianten gebräuchlich. Im einfachsten Fall wird das Zulaufgemisch in zwei Fraktionen, eine leichtsiedende Kopffraktion und eine schwersiedende Sumpffraktion, zerlegt. Bei der Auftrennung von Zulaufgemischen in mehr als zwei Fraktionen müssen nach dieser Verfahrensvariante mehrere Destillationskolonnen eingesetzt werden. Um den apparativen Aufwand zu begrenzen, setzt man bei der Auftrennung von Vielstoffgemischen nach Möglichkeit Kolonnen mit flüssigen oder dampfförmigen Seitenabzügen ein. Die Anwendungsmöglichkeit von Destillationskolonnen mit Seitenabzügen ist jedoch dadurch stark eingeschränkt, daß die an den Seitenabzugsstellen entnommenen Produkte nie völlig rein sind. Bei Seitenentnahmen im Verstärkungsteil, die üblicherweise in flüssiger Form erfolgen, enthält das Seitenprodukt noch Anteile an leichtsiedenden Komponenten, die über Kopf abgetrennt werden sollen. Entsprechendes gilt für Seitenentnahmen im Abtriebsteil, die meist dampfförmig erfolgen, bei denen das Seitenprodukt noch Hochsiederanteile aufweist. Die Verwendung von konventionellen Seitenabzugskolonnen ist daher auf Fälle begrenzt, in denen verunreinigte Seitenprodukte zulässig sind.

Eine Alternative hierzu sind sogenannte Trennwandkolonnen, d.h. Kolonnen, die mit aus einer in Kolonnenlängsrichtung angeordneten vertikalen Trennwand, in der Regel einem ebenen Blech, eine Quervermischung von Flüssigkeits- und Brüdenströmen in Teilbereichen der Kolonne verhindern. Dadurch wird es möglich, in Trennwandkolonnen reine Seitenströme abzuziehen.

Die in Kolonnenlängsrichtung angeordnete Trennwand teilt den Kolonneninnenraum in einen Zulaufteil, einen Entnahmeteil, einen oberen gemeinsamen Kolonnenteil und einen unteren gemeinsamen Kolonnenteil. Der Zulauf des aufzutrennenden Gemisches wird in der Regel in einen mittleren Bereich des Zulaufteils, zwischen einem oberen und einem unteren Bereich des Zulaufteils gelegt. Im Entnahmeteil ist zwischen einem oberen und einem unteren Bereich desselben eine Seitenentnahme angeordnet. Es ist auch möglich, eine weitere Seitenentnahme zwischen dem unteren und einem untersten Bereich des Entnahmeteils vorzusehen.

Eine Trennwandkolonne ist im Prinzip eine apparative Vereinfachung von thermisch gekoppelten Destillationskolonnen, wobei jedoch letztere höhere Investitionskosten aufweisen. Trennwandkolonnen und thermisch gekoppelte Kolonnen bieten gegenüber der Anordnung von konventionellen Destillationskolonnen sowohl hinsichtlich des Energiebedarfs als auch der Investitionskosten Vorteile und werden daher bevorzugt industriell eingesetzt. Trennwandkolonnen können sowohl als Füllkörper oder geordnete Packungen enthaltende Packungskolonnen oder als Bodenkolonnen ausgestaltet sein. Werden Packungskolonnen eingesetzt, so sind geordnete Gewebepackungen mit einer spezifischen Oberfläche von 300 bis 800 m²/m³, bevorzugt von 500 bis 750 m²/m³, besonders geeignet. Üblicherweise sind Trennwandkolonnen so ausgestaltet, dass die Trennwand senkrecht verläuft und die Querschnittsflächen des Entnahmeteils und des Zulaufteils gleich groß sind. Weitere Informationen über Trennwandkolonnen sind beispielsweise in der EP-A 0 122 367, in der EP-B 0 126 288 und in der EP-B 0 133 510 aufgeführt.

Trennwandkolonnen wurden bislang in der Regel mit mittig angeordneter Trennwand versehen, und somit mit gleichen Querschnittsflächen im Zulauf- und Entnahmeteil. In der EP-A 1 084 741 ist eine Trennwandkolonne beschrieben, in der der Querschnitt für den Zulaufteil vom Querschnitt des Entnahmeteils verschieden ist. Allerdings ist der Querschnitt des Zulaufteils wie auch des Entnahmeteils jeweils über die gesamte Höhe derselben konstant.

Die DE-A 100 08 634 beschreibt eine weitere Trennwandkolonne mit außermittig angeordneter Trennwand, wobei der obere Bereich des Zulaufteils gegenüber dem unteren Bereich des Zulaufteils einen verkleinerten Querschnitt und der obere Bereich des Entnahmeteils gegenüber dem unteren Bereich des Entnahmeteils einen vergrößerten Querschnitt aufweist. Durch diese besondere Ausgestaltung war es möglich, bei niedrigen Betriebsdrücken, im Bereich von 0,5 bis 20 mbar, eine kostengünstigere Verfahrensführung mit besserer Trennleistung zu gewährleisten.

In besonderen Verfahrensgestaltungen, mit ganz oder teilweise dampfförmigem Zulauf und/oder ganz oder teilweise dampfförmiger Seitenentnahme ist die Dampfmenge im Zulaufteil und/oder im Entnahmeteil einer Trennwandkolonne nicht über die gesamte Kolonnenhöhe konstant.

Aufgabe der Erfindung war es, ein Verfahren zur destillativen Auftrennung von Stoffgemischen in einer Trennwandkolonne zur Verfügung zu stellen, die unter diesen Voraussetzungen optimal ausgelastet ist und somit wirtschaftlicher gegenüber bekannten Trennwandkolonnen arbeitet.

Die Erfindung geht aus von einer Trennwandkolonne mit einer im wesentlichen Kolonnenlängsrichtung angeordneten Trennwand, die den Kolonneninnenraum in einen Zulaufteil, einen Entnahmeteil, einen oberen gemeinsamen Kolonnenteil und einen unteren gemeinsamen Kolonnenteil aufteilt, mit ganz oder teilweise dampfförmigem Zulauf eines aufzutrennenden Gemisches zwischen dem oberen Bereich des Zulaufteils und dem unteren Bereich des Zulaufteils und/oder ganz oder teilweise dampfförmiger Seitenentnahme zwischen dem oberen Bereich des Entnahmeteils und dem unteren Bereich des Entnahmeteils.

Die Lösung ist dadurch gekennzeichnet, dass bei ganz oder teilweise dampfförmigem Zulauf die Querschnittsfläche des oberen Bereichs des Zulaufteils durch Versetzen der Trennwand in Richtung des oberen Bereichs des Entnahmeteils und/oder bei ganz oder teilweise dampfförmiger Seitenentnahme die Querschnittsfläche des unteren Bereichs des Entnahmeteils durch planparalleles Versetzen der Trennwand in Richtung des unteren Bereichs des Zulaufteils vergrößert ist, dergestalt, daß der F-Faktor in allen Kolonnenbereichen weitgehend gleich ist.

Ein Maß für die Belastungen der Kolonne bzw. der trennwirksamen Einbauten in der Kolonne ist der sogenannte F-Faktor. Der F-Faktor wird definiert als Produkt aus der Gasgeschwindigkeit w_{G} in der Dimension m/s multipliziert mit der Quadratwurzel aus der Gasdichte ρ_{G} in der Dimension kg/m³. Für gegebene Kolonneneinbauten gibt es jeweils einen maximalen F-Faktor, der aus Wirtschaftlichkeitsgründen möglichst erreicht, jedoch nicht überschritten werden darf. Entsprechend der obigen Definition ist der F-Faktor proportional der Gasgeschwindigkeit, die wiederum proportional zum Verhältnis zwischen dem Massenstrom des Gases und der durchströmten Querschnittsfläche ist. Der F-Faktor ist somit proportional zum Verhältnis aus dem Massenstrom des Gases und der vom Gas durchströmten Querschnittsfläche.

Für einen wirtschaftlichen Kolonnenbetrieb ist es somit anzustreben, dass sämtliche Kolonnenbereiche mit dem jeweils maximalen F-Faktor belastet werden. Dementsprechend sollte, sofern die trennwirksamen Einbauten in sämtlichen Kolonnenbereichen gleich sind, der F-Faktor in allen Kolonnenbereichen zumindest weitgehend gleich sein.

Die Erfinder haben erkannt, dass, um einen weitgehend gleichen F-Faktor in allen Kolonnenbereichen sicherzustellen, entsprechend den obigen Ausführungen das Verhältnis aus dem Massenstrom der gasförmigen Phase und dem durchströmten Querschnitt gleich bleiben muß.

Dies wird erfindungsgemäß dadurch erreicht, dass die Trennwand außermittig angeordnet wird, und zwar dergestalt, dass bei ganz oder teilweise dampfförmigem Zulauf die Querschnittsfläche des oberen Bereichs des Zulaufteils durch Versetzen der Trennwand in Richtung des oberen Bereichs des Entnahmeteils vergrößert wird. Wird zusätzlich oder alternativ ein ganz oder teilweise dampfförmiger Seitenstrom entnommen, so wird erfindungsgemäß zusätzlich oder alternativ die Querschnittsfläche des unteren Bereichs des Entnahmeteils ebenfalls durch außermittige Anordnung der Trennwand, und zwar durch Versetzen derselben in Richtung des unteren Bereichs des Zulaufteils vergrößert.

In Abhängigkeit von der konkreten Trennaufgabe kann es vorteilhaft sein, unterhalb der ersten dampfförmigen Seitenentnahme eine zweite, ganz oder teilweise dampfförmige Seitenentnahme anzuordnen zwischen dem unteren Bereich des Entnahmeteils und dem untersten Bereich des Entnahmeteils , dadurch gekennzeichnet, dass die Querschnittsfläche des untersten Bereichs des Entnahmeteils durch Versetzen der Trennwand (TW) in Richtung des unteren Zulaufteils vergrößert ist, dergestalt, daß der F-Faktor in allen Bereichen der Trennwandkolonne weitgehend gleich ist.

Das Verhältnis der Querschnittsflächen des oberen Bereichs des Entnahmeteils zum oberen Bereich des Zulaufteils (2) liegt zwischen 1:1,6 und 1: 2,4, bevorzugt bei 1:2,0 liegt und/oder daß das Verhältnis der Querschnittsflächen des unteren Bereichs des Entnahmeteils (5) zum unteren Bereich des Zulaufteils (4) zwischen 1,6:1 und 2,4:1, bevorzugt bei 2,0:1 liegt.

Die Trennwand ist in der Regel ein ebenes Blech, das zwischen Zulauf und Entnahmeteil an der Kolonneninnenwand eingeschweißt, lösbar befestigt oder auch lose montiert ist.

Das Versetzen der Trennwand ist bevorzugt durch ein Versatzstück ausgeführt, d.h. durch ein von der Vertikalen abweichendes Teilstück der Trennwand, das zur Horizontalen in einem Winkel von 30 bis 70°, bevorzugt in einem Winkel von 60°, geneigt ist. Bei dieser Anordnung werden Verwirbelungen des Gasstroms, die die Trennleistung beeinträchtigen können, weitgehend vermieden.

In einer bevorzugten Ausführungsvariante stimmt die Bauhöhe des oberen Bereichs des Zulaufteils mit der Bauhöhe des oberen Bereichs des Entnahmeteils und/oder die Bauhöhe des unteren Bereichs des Zulaufteils mit der Bauhöhe des unteren Bereichs des Entnahmeteils überein. Falls sich ungleiche Bauhöhen der trennwirksamen Einbauten nicht umgehen lassen, werden in einzelnen Kolonnenbereichen Teilstücke nicht mit Trenneinbauten versehen. Durch die Wahl von Trenneinbauten mit verschiedener Trennleistung lassen sich in der Praxis jedoch freie Räume in der Regel vermeiden.

Zur Entnahme und Aufteilung der Flüssigkeiten am oberen Ende der Trennwand und an der (den) Seitenentnahmestelle(n) eignen sich sowohl innenliegende als auch außerhalb der Kolonne angeordnete Auffangräume für die Flüssigkeit, die die Funktion einer Pumpenvorlage übernehmen oder für eine ausreichend hohe statische Flüssigkeitshöhe sorgen. Durch Stellorgane, beispielsweise Ventile, wird eine geregelte Flüssigkeitsweiterleitung ermöglicht. Bei Bodenkolonnen ist es besonders günstig, hierzu den Ablaufschacht auf etwa das 2- bis 3-fache der üblichen Höhe zu vergrößern und in ihm die entsprechende Flüssigkeitsmenge zu speichern. Bei der Verwendung von gepackten Kolonnen wird die Flüssigkeit zunächst in Sammlern gefaßt und von dort aus in einen innenliegenden oder außenliegenden Auffangraum geleitet. Bei Bodenkolonnen und höheren Drücken kann die Flüssigkeit auch vorteilhaft in einem Kaminboden angestaut werden.

Gegenstand der Erfindung ist auch ein Verfahren zur destillativen Auftrennung von Stoffgemischen in einer Trennwandkolonne, wobei zur Kompensation von Störungen der Zulaufmenge und/oder der Zulaufkonzentration die Aufteilung der Flüssigkeit am oberen Ende der Trennwand (TW) und an der oder den Seitenentnahmestellen dergestalt geregelt wird, daß die Mengenströme der Flüssigkeiten, die auf den oberen Bereich des Zulaufteils und/oder den unteren Bereich des Entnahmeteils oder den untersten Bereich des Entnahmeteils aufgegeben werden nicht unter 30 % ihres Normalwertes absinken.

Die Erfindung wird im folgenden anhand einer Zeichnung sowie von Ausführungsbeispielen näher erläutert.

Es zeigen im einzelnen:
- Figur 1: die schematische Darstellung einer ersten Ausführungsform einer erfindungsgemäßen Trennwandkolonne mit vergrößertem Querschnitt des oberen Bereichs des Zulaufteils,
- Figur 2: die schematische Darstellung einer weiteren Ausführungsform einer erfindungsgemäßen Trennwandkolonne mit vergrößertem Querschnitt des unteren Bereichs des Entnahmeteils,
- Figur 3: die schematische Darstellung einer weiteren Ausführungsform einer erfindungsgemäßen Trennwandkolonne mit zwei ganz oder teilweise dampfförmigen Seitenentnahmen mit vergrößertem Querschnitt des oberen Bereichs des Zulaufteils,
- Figur 4: die schematische Darstellung einer Ausführungsform einer erfindungsgemäßen Trennwandkolonne mit zwei ganz oder teilweise dampfförmigen Seitenentnahmen mit vergrößerten Querschnitten der unteren und untersten Bereiche de Entnahmeteils,
- Figur 5: die schematische Darstellung einer Trennwandkolonne nach dem Stand der Technik mit einer Seitenentnahme und
- Figur 6: die schematische Darstellung einer Trennwandkolonne nach dem Stand der Technik mit zwei Seitenentnahmen.

In den Figuren bezeichnen gleiche Bezugsziffern gleiche oder entsprechende Merkmale.

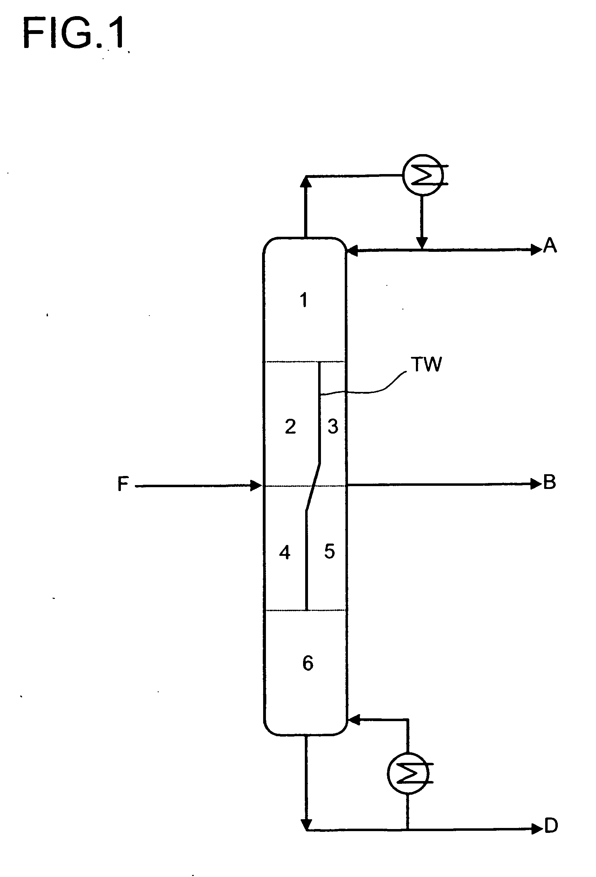

Die in Figur 1 dargestellte Trennwandkolonne weist eine in Teilbereichen außermittig angeordnete Trennwand TW auf, die die Trennwandkolonne in einen Zulaufteil 2, 4, einen Entnahmeteil 3, 5, einen oberen gemeinsamen Kolonnenbereich 1 und einen unteren gemeinsamen Kolonnenbereich 6 aufteilt. Der Zulauf F wird zwischen dem oberen Bereich des Zulaufteils 2 und dem unteren Bereich des Zulaufteils 4 aufgegeben, der Seitenentnahmestrom B wird zwischen dem oberen Bereich des Entnahmeteils 3 und dem unteren Bereich des Entnahmeteils 5 abgezogen. Darüber hinaus werden aus der Kolonne ein Kopfstrom A und ein Sumpfstrom D abgezogen. Die Trennwand TW ist im oberen Bereich derselben außermittig angeordnet, dergestalt, daß der Querschnitt des oberen Bereichs des Zulaufteils 2 auf Kosten des Querschnitts des oberen Bereichs des Entnahmeteils 3 vergrößert ist.

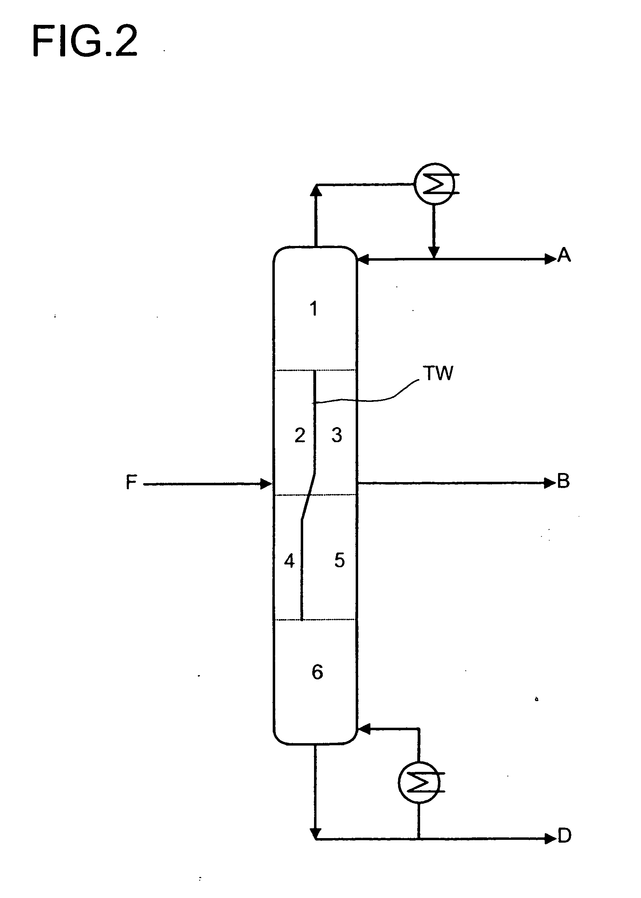

Die in Figur 2 dargestellte Ausführungsform unterscheidet sich von der Ausführungsform in Figur 1 dadurch, daß die Trennwand TW im oberen Bereich derselben mittig, jedoch im unteren Bereich derselben außermittig angeordnet ist, dergestalt, daß der untere Bereich des Entnahmeteils 5 gegenüber dem unteren Bereich des Zulaufteils 4 vergrößert ist.

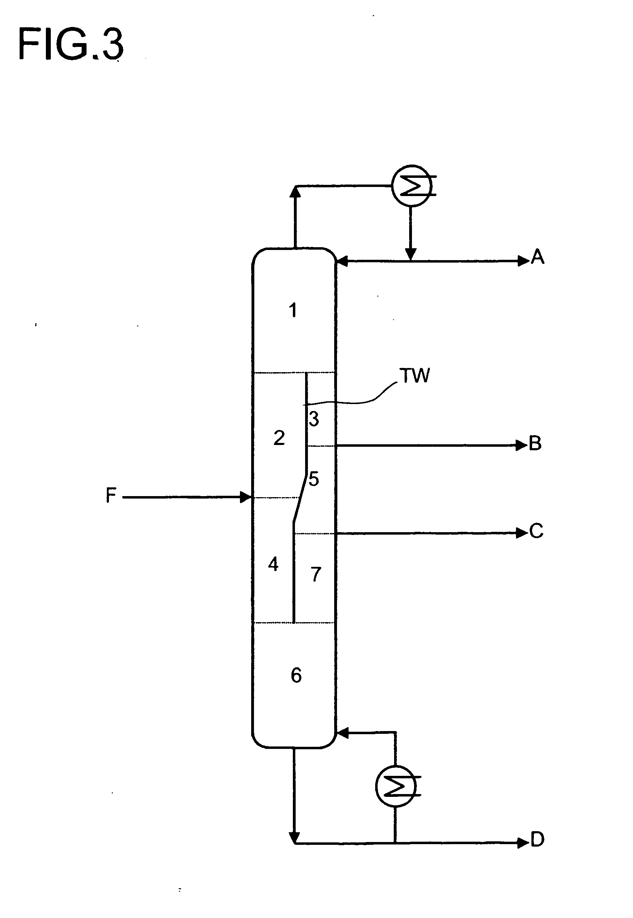

Die in Figur 3 schematisch dargestellte Ausführungsform zeigt eine Trennwandkolonne mit zwei ganz oder teilweise dampfförmigen Seitenentnahmen B und C. Durch außermittige Anordnung der Trennwand TW in Teilbereichen derselben ist der obere Bereich des Zulaufteils 2 auf Kosten des oberen Bereichs des Entnahmeteils 3 und des unteren Bereichs des Entnahmeteils 5 vergrößert.

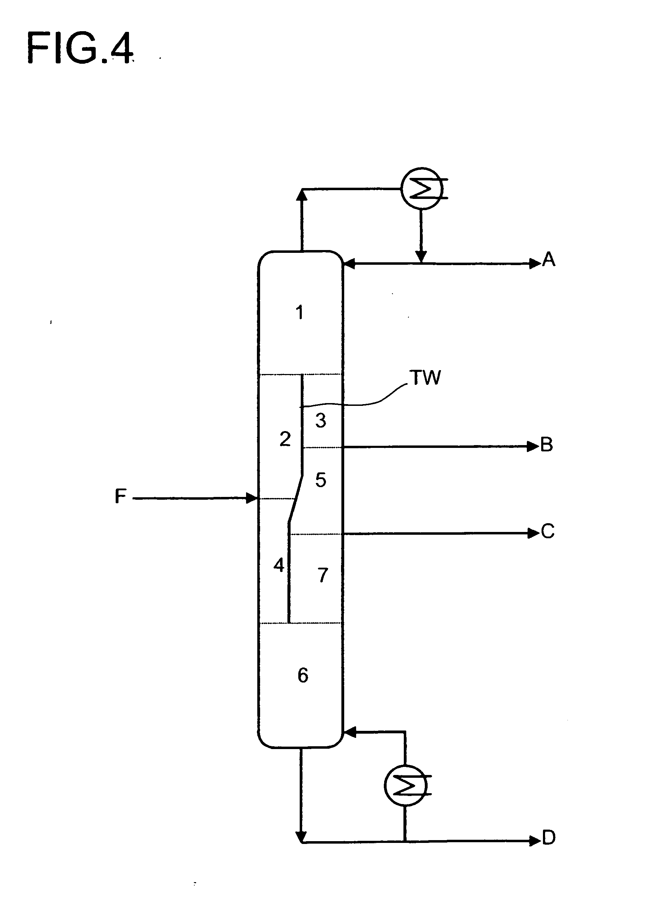

Figur 4 zeigt eine weitere Ausführungsform einer erfindungsgemäßen Trennwandkolonne mit zwei ganz oder teilweise dampfförmigen Seitenentnahmen B und C, wobei die Trennwand TW in Teilbereichen derselben außermittig angeordnet ist, dergestalt, daß der untere Bereich des Entnahmeteils 5 und der unterste Bereich des Entnahmeteils 7 auf Kosten des unteren Bereichs des Zulaufteils 4 vergrößert sind.

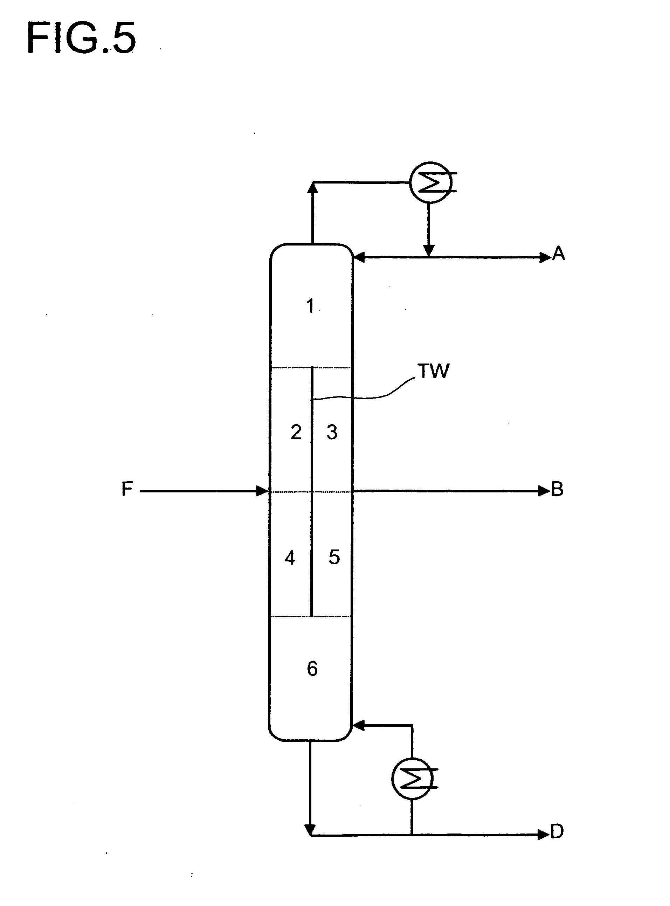

Demgegenüber zeigt Figur 5 die schematische Darstellung einer Trennwandkolonne nach dem Stand der Technik mit mittig angeordneter Trennwand TW und entsprechend mit Kolonnenteilbereichen 2, 3, 4 und 5 mit jeweils gleichem Querschnitt. Die Trennwandkolonne weist eine einzige Seitenentnahme B zwischen dem oberen Bereich des Entnahmeteils 3 und dem unteren Bereich des Entnahmeteils 5 auf.

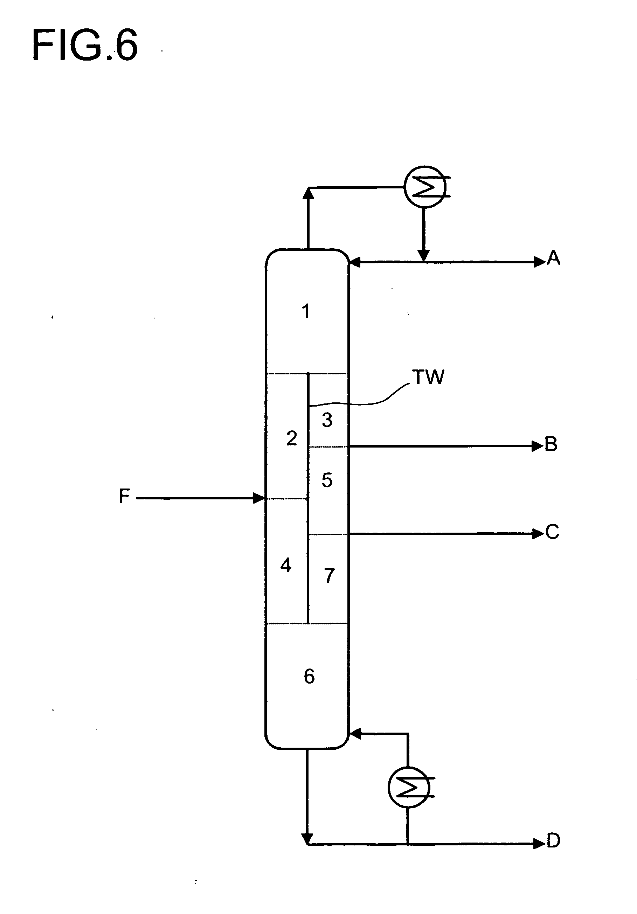

Demgegenüber zeigt Figur 6 eine weitere Ausführungsform einer Trennwandkolonne nach dem Stand der Technik mit zwei Seitenentnahmen B bzw. C, wobei Strom B zwischen dem oberen Bereich des Entnahmeteils 3 und dem unteren Bereich des Entnahmeteils 5 und Strom C zwischen dem unteren Bereich des Entnahmeteils 5 und dem untersten Bereich des Entnahmeteils 7 abgezogen wird. Auch diese Trennwandkolonne ist, analog der in Figur 5 dargestellten Ausführungsform, mit mittig angeordneter Trennwand TW ausgestattet und somit mit konstanten Querschnitten in den Kolonnenteilbereichen 2, 3, 4, 5, 7.

### Ausführungsbeispiele

Die Beispiele wurden einer Versuchskolonne mit einem Durchmesser von 0,08 m durchgeführt, die über eine Höhe von insgesamt 5 m mit einer Drahtgewebepackung Typ BX der Firma Sulzer AG, Winterthur mit einer spezifischen Oberfläche von 500 m²/m³ bestückt war und eine theoretische Trennstufenzahl von 35 aufwies. In der Kolonne war zwischen der 6. und 21. Trennstufe, bei Zählung der Trennstufenzahl von unten, eine Trennwand eingeschweißt. Der Zulauf und die Entnahmestelle waren auf gleicher Kolonnenhöhe angeordnet. Die Aufteilung der Flüssigkeit auf den oberen Bereich des Zulaufteils 2 und den oberen Bereich des Entnahmeteils 3 erfolgte im Mengenverhältnis 1:2. Das Querschnittsverhältnis des oberen Bereichs des Zulaufteils 2 und des oberen Bereichs des Entnahmeteils 3 der Trennwandkolonne betrug 2:1, das Querschnittsverhältnis des unteren Bereichs des Zulaufteils 4 und des unteren Bereichs des Entnahmeteils 5 der Trennwandkolonne betrug 1:1. Die Kolonne entsprach somit der schematischen Darstellung in Figur 1. Das Versatzstück zwischen dem oberen und unteren Teilstück der Trennwand wies einen Winkel von 60° gegen die Horizontale auf. Die Trennwandkolonne wurde mit einem Kopfdruck von 10 mbar betrieben.

### Beispiel 1

### Reindestillation eines C15-Alkohols:

In die oben beschriebene Versuchskolonne wurde ein Zulauf mit einem Mengenstrom von 977g/h bei einer Temperatur von 153°C gasförmig eingespeist. Das Zulaufgemisch enthielt 77 Massen-% C15-Alkohol, 19 Massen-% leichtersiedende Nebenkomponenten und 4% höhersiedende Nebenkomponenten, jeweils bezogen auf den Siedepunkt des C15-Alkohols. Bei einem Rücklaufverhältnis von 8 wurden am Kolonnenkopf 180 g/h leichtersiedende Nebenkomponenten mit einem Restgehalt von 1 Massen% C15-Alkohol entnommen. Das Sumpfprodukt mit den höhersiedenden Nebenkomponenten wurde in einem Mengenstrom von 67 g/h mit einem Gehalt von 47 Massen% C15-Alkohol abgezogen. Das Wertprodukt C15-Alkohol wurde mit einem Massenstrom von 730 g/h und einer Reinheit von über 98% ab der Seitenentnahme flüssig abgezogen.

### Vergleichsbeispiel 1:

Bei ansonsten gleicher Versuchsanordnung, jedoch mit mittiger Anordnung der Trennwand war der Durchsatz durch die Versuchskolonne um 25% geringer.

### Beispiel 2

### Reindestillation eines C10-Alkohols:

In dieselbe Versuchskolonne wurde ein Mengenstrom von 931 g/h bei einer Temperatur von 158°C gasförmig eingespeist. Das Zulaufgemisch enthielt 75 Massen% C10-Alkohol, 19 Massen% leichtersiedende Nebenkomponenten und 6% höhersiedende Nebenkomponenten, jeweils bezogen auf den Siedepunkt des C10-Alkohols. Bei einem Rücklaufverhältnis von 8 wurden am Kolonnenkopf 172 g/h leichtersiedende Nebenkomponenten mit einem Restgehalt von 1 Massen% C10-Alkohols entnommen. Das Sumpfprodukt mit den höhersiedenden Nebenkomponenten wurde in einen Mengenstrom von 99 g/h mit einem Gehalt von 46 Massen% C10-Alkohol abgezogen. Das Wertprodukt wurde mit einem Massenstrom von 660 g/h und einer Reinheit von > 98% an der Seitenentnahme flüssig abgezogen. Die Aufteilung der Flüssigkeit auf den oberen Bereich des Zulaufteils 2 und den oberen Bereich des Entnahmeteils 3 der Versuchskolonne erfolgte im Mengenverhältnis 1:2.

### Vergleichsversuch 2:

Der Versuch wurde unter ansonsten gleichen Bedingungen, jedoch mit mittiger Anordnung der Trennwand wiederholt. Der Durchsatz lag um 25% niedriger gegenüber dem Beispiel nach der Erfindung.

### Beispiel 3

### Reindestillation eines C20-Alkohols:

In dieselbe Versuchskolonne wurde ein Mengenstrom von 766 g/h bei einer Temperatur von 188 °C gasförmig eingespeist. Das Zulaufgemisch enthielt 73 Massen% C20-Alkohol, 23 Massen% leichtersiedende Nebenkomponenten und 4% höhersiedende Nebenkomponenten. Bei einem Rücklaufverhältnis von 15 wurden am Kolonnenkopf 172 g/h leichtersiedende Nebenkomponenten mit einem Restgehalt von 1 Massen% C20-Alkohol entnommen. Das Sumpfprodukt mit den höhersiedenden Nebenkomponenten wurde in einem Mengenstrom von 53 g/h mit einem Gehalt von 53 Massen% C20-Alkohol abgezogen. Das Wertprodukt wurde mit einem Massenstrom von 540 g/h und einer Reinheit von > 98% an der Seitenentnahme flüssig abgezogen. Die Aufteilung der Flüssigkeit auf den oberen Bereich des Zulaufteils und den oberen Bereich des Entnahmeteils erfolgte im Mengenverhältnis 1:2. Die Kolonne wurde, abweichend von den Versuchen in Beispiel 1 und 2 mit einem Kopfdruck von 2 mbar betrieben.

### Vergleichsversuch 3:

Der Versuch wurde unter ansonsten gleichen Bedingungen, jedoch mit mittiger Anordnung der Trennwand wiederholt. Der Durchsatz lag um 25% unter dem in Beispiel 3 beschriebenen Durchsatz nach dem erfindungsgemäßen Verfahren.

## Patentansprüche

1. Verfahren zur destillativen Auftrennung von Stoffgemischen in einer Trennwandkolonne mit einer im wesentlichen Kolonnenlängsrichtung angeordneten Trennwand (TW), die den Kolonneninnenraum in einen Zulaufteil (2, 4), einen Entnahmeteil (3, 5), einen oberen gemeinsamen Kolonnenteil (1) und einen unteren gemeinsamen Kolonnenteil (6) aufteilt, mit ganz oder teilweise dampfförmigem Zulauf (F) eines aufzutrennenden Gemisches zwischen dem oberen Bereich des Zulaufteils (2) und dem unteren Bereich des Zulaufteils (4) und/oder ganz oder teilweise dampfförmiger Seitenentnahme (B) zwischen dem oberen Bereich des Entnahmeteils (3) und dem unteren Bereich des Entnahmeteils (5), **dadurch gekennzeichnet, dass** bei ganz oder teilweise dampfförmigem Zulauf (F) die Querschnittsfläche des oberen Bereichs des Zulaufteils (2) durch planparalleles Versetzen der Trennwand (TW) in Richtung des oberen Bereichs des Entnahmeteils (3) und/oder bei ganz oder teilweise dampfförmiger Seitenentnahme (B) die Querschnittsfläche des unteren Bereichs des Entnahmeteils (5) durch Versetzen der Trennwand (TW) in Richtung des unteren Bereichs des Zulaufteils (4) vergrößert ist, dergestalt, daß der F-Faktor in allen Kolonnenbereichen (1, 2, 3, 4, 5, 6) weitgehend gleich ist.

2. Verfahren nach Anspruch 1 mit einer zweiten, unterhalb der Seitenentnahme (B) angeordneten, ganz oder teilweise dampfförmigen Seitenentnahme (C), zwischen dem unteren Bereich des Entnahmeteils (5) und dem untersten Bereich des Entnahmeteils (7), **dadurch gekennzeichnet, dass** die Querschnittsfläche des untersten Bereichs des Entnahmeteils (7) durch Versetzen der Trennwand (TW) in Richtung des unteren Zulaufteils (4) vergrößert ist, dergestalt, daß der F-Faktor in allen Bereichen (1, 2, 3, 4, 5, 6 ,7) der Trennwandkolonne weitgehend gleich ist.

3. Verfahren nach Anspruch 1 oder 2, **dadurch gekennzeichnet, dass** das Verhältnis der Querschnittsflächen des oberen Bereichs des Entnahmeteils (3) zum oberen Bereich des Zulaufteils (2) zwischen 1: 1,6 und 1: 2,4, bevorzugt bei 1:2,0 liegt und/oder daß das Verhältnis der Querschnittsflächen des unteren Bereichs des Entnahmeteils (5) zum unteren Bereich des Zulaufteils (4) zwischen 1,6:1 und 2,4:1, bevorzugt bei 2,0:1 liegt.

4. Verfahren nach einem der Ansprüche 1 bis 3, **dadurch gekennzeichnet, dass** das Versetzen der Trennwand (TW) durch ein Versatzstück ausgeführt ist, das zur Horizontalen in einem Winkel von 30 bis 70°, bevorzugt in einem Winkel von 60° geneigt ist.

5. Verfahren nach einem der Ansprüche 1 bis 4, **dadurch gekennzeichnet, dass** die Bauhöhe des oberen Bereichs des Zulaufteils (2) mit der Bauhöhe des oberen Bereichs des Entnahmeteils (3) und/oder daß die Bauhöhe des unteren Bereichs des Zulaufteils (4) mit der Bauhöhe des unteren Entnahmeteils (5) übereinstimmt.

6. Verfahren nach einem der Ansprüche 1 bis 5, **dadurch gekennzeichnet, dass** zur Kompensation von Störungen der Zulaufmenge und/oder der Zulaufkonzentration die Aufteilung der Flüssigkeit am oberen Ende der Trennwand (TW) und an der oder den Seitenentnahmestellen (B, C) dergestalt geregelt wird, daß die Mengenströme der Flüssigkeiten, die auf den oberen Bereich des Zulaufteils (2) und/oder den unteren Bereich des Entnahmeteils (5) oder den untersten Bereich des Entnahmeteils (7) aufgegeben werden nicht unter 30% ihres Normalwertes absinken.

## Claims

1. A process for separating by distillation mixtures of substances in a dividing-wall column having a dividing wall (DW) which is essentially disposed along the long direction of the column, which divides the column interior into a feed part (2, 4), a take off part (3, 5), an upper shared column part (1) and a lower shared column part (6), with feed (F) in whole or in part in the vaporous state of a mixture to be separated between the upper region of the feed part (2) and the lower region of the feed part (4) and/or side stream take off (B) in whole or in part in the vaporous state between the upper region of the take off part (3) and the lower region of the take off part (5), which comprises, if the feed (F) is in whole or in part in the vaporous state, the cross-sectional area of the upper region of the feed part (2) being increased by plane-parallel displacement of the dividing wall (DW) toward the upper region of the take off part (3) and/or if the side stream take off (B) is in whole or in part in the vaporous state, the cross-sectional area of the lower region of the take off part (5) being increased by displacement of the dividing wall (DW) toward the lower region of the feed part (4), in such a manner that the F factor is substantially the same in all column regions (1, 2, 3, 4, 5, 6).

2. The process according to claim 1, having a second side stream take off (C) in whole or in part in the vaporous state, disposed below the side stream take off (B), and between the lower region of the take off part (5) and the lowest region of the take off part (7), wherein the cross-sectional area of the lowest region of the take off part (7) is increased by displacing the dividing wall (DW) toward the lower feed part (4) in such a manner that the F factor is substantially the same in all regions (1, 2, 3, 4, 5, 6, 7) of the dividing-wall column.

3. The process according to claim 1 or 2, wherein the ratio of the cross-sectional areas of the upper region of the take off part (3) to the upper region of the feed part (2) is from 1:1.6 to 1:2.4, preferably 1:2.0, and/or the ratio of the cross-sectional areas of the lower region of the take off part (5) to the lower region of the feed part (4) is from 1.6:1 to 2.4:1, preferably 2.0:1.

4. The process according to one of claims 1 to 3, wherein the dividing wall (DW) is displaced by an offset piece which is inclined to the horizontal at an angle of from 30 to 70°, preferably at an angle of 60°.

5. The process according to one of claims 1 to 4, wherein the height of the upper region of the feed part (2) matches the height of the upper region of the take off part (3) and/or the height of the lower region of the feed part (4) matches the height of the lower take off part (5).

6. The process according to one of claims 1 to 5, wherein, to compensate for interference in the feed rate and/or the feed concentration, the division of liquid at the upper end of the dividing wall (DW) and at the side stream take off point or points (B, C) is controlled in such a manner that the flow rates of the liquids which are charged at the upper region of the feed part (2) and/or the lower region of the take off part (5) or the lowest region of the take off part (7) do not fall below 30% of their usual value.

## Revendications

1. Procédé de séparation par distillation de mélanges dans une colonne à paroi de séparation munie d'une paroi de séparation (TW) placée essentiellement dans la direction longitudinale de la colonne, qui divise la chambre intérieure de la colonne en une partie d'alimentation (2, 4), une partie de soutirage (3, 5), une partie de colonne commune supérieure (1) et une partie de colonne commune inférieure (6), avec une alimentation (F) en totalité ou en partie sous forme vapeur d'un mélange à séparer entre la zone supérieure de la partie d'alimentation (2) et la zone inférieure de la partie d'alimentation (4) et/ou un soutirage latéral (B) en totalité ou en partie sous forme vapeur entre la zone supérieure de la partie de soutirage (3) et la zone inférieure de la partie de soutirage (5), **caractérisé en ce que** dans le cas d'une alimentation (F) en totalité ou en partie sous forme vapeur, la section de la zone supérieure de la partie d'alimentation (2) est agrandie par décalage coplanaire de la paroi de séparation (TW) dans la direction de la zone supérieure de la partie de soutirage (3) et/ou dans le cas d'un soutirage latéral (B) en totalité ou en partie sous forme vapeur, la section de la zone inférieure de la partie de soutirage (5) est agrandie par décalage de la paroi de séparation (TW) dans la direction de la zone inférieure de la partie d'alimentation (4), de manière à ce que le facteur F soit sensiblement identique dans toutes les zones (1, 2, 3, 4, 5, 6) de la colonne.

2. Procédé selon la revendication 1, avec un second soutirage latéral (C) en partie ou en totalité sous forme vapeur, situé sous le soutirage latéral (B), entre la zone inférieure de la partie de soutirage (5) et la zone la plus inférieure de la partie de soutirage (7), **caractérisé en ce que** la section de la zone la plus inférieure de la partie de soutirage (7) est agrandie par décalage de la paroi de séparation (TW) dans la direction de la partie d'alimentation inférieure (4), de manière à ce que le facteur F soit sensiblement identique dans toutes les zones (1, 2, 3, 4, 5, 6, 7) de la colonne à paroi de séparation.

3. Procédé selon la revendication 1 ou 2, **caractérisé en ce que** le rapport entre la section de la zone supérieure de la partie de soutirage (3) et de la zone supérieure de la partie d'alimentation (2) se situe entre 1:1,6 et 1:2,4, de préférence à 1:2,0 et/ou **en ce que** le rapport entre la section de la zone inférieure de la partie de soutirage (5) et de la zone inférieure de la partie d'alimentation (4) se situe entre 1,6:1 et 2,4:1, de préférence à 2,0:1.

4. Procédé selon l'une quelconque des revendications 1 à 3, **caractérisé en ce que** le décalage de la paroi de séparation (TW) est réalisé par un composant modulaire qui est penché par rapport à l'horizontale d'un angle de 30 à 70°, de préférence d'un angle de 60°.

5. Procédé selon l'une quelconque des revendications 1 à 4, **caractérisé en ce que** la hauteur de construction de la zone supérieure de la partie d'alimentation (2) correspond à la hauteur de construction de la zone supérieure de la partie de soutirage (3) et/ou **en ce que** la hauteur de construction de la zone inférieure de la partie d'alimentation (4) correspond à la hauteur de construction de la partie de soutirage inférieure (5).

6. Procédé selon l'une quelconque des revendications 1 à 5, **caractérisé en ce que** pour compenser les perturbations de la quantité d'alimentation et/ou de la concentration d'alimentation, la répartition du liquide à l'extrémité supérieure de la paroi de séparation (TW) et à l'emplacement ou aux emplacements de soutirage latéral (B, C) est réglée de manière à ce que les débits des liquides associés à la zone supérieure de la partie d'alimentation (2) et/ou à la zone inférieure de la partie de soutirage (5) ou à la zone la plus inférieure de la partie de soutirage (7) ne chutent pas en dessous de 30 % de leur valeur normale.
